# EUROPÄISCHE PATENTANMELDUNG

(11) **EP 1 441 091 A2**
(43) Veröffentlichungstag der Anmeldung: **28.07.2004**
(21) Anmeldenummer: 04000722.1
(22) Anmeldetag: 15.01.2004
(51) Int. Cl.: E05B 65/10, B66B 13/00, F16P 3/08

(54) **Türverschluss mit Notentriegelung**

(30) Priorität: 15.01.2003 DE 10301325
(71) Anmelder: Hans & Jos. Kronenberg GmbH, 51427 Bergisch Gladbach (DE)
(72) Erfinder: Loose, Horst, 40764 Langenfeld (DE); Klaus, Holger, 51427 Bergisch Gladbach (DE)
(74) Vertreter: Gudat, Axel, Dr.

(57) **Zusammenfassung**

Die Erfindung betrifft einen Türverschluss für eine Tür einer Maschine oder eines Aufzuges, wobei der Türverschluss ein Gehäuse (1) und einen Riegel (2) aufweist, der bezüglich der Tür in eine Verriegelungsstellung und mittels eines Kopplungsmechanismus (3,4), der durch eine externe Einrichtung betätigbar ist, in eine Freigabestellung überführbar ist und der in dem Gehäuse (1) gelagert ist, wobei der Verschluss eine manuell betätigbare Notentriegelung (11, 12, 14) zur Überführung des Riegels (2) in seine Freigabestellung aufweist, wobei die Notentriegelung (11, 12, 14) einen Mitnehmer (11) aufweist, der unter Überführung des Riegels (2) in die Freigabestellung durch einen Notentriegelungsschlüssel betätigbar ist, und wobei ein Übertragungsmechanismus zur Übertragung einer Bewegung des Mitnehmers auf den Kopplungsmechanismus (3,4) und/oder auf den Riegel (2) vorgesehen ist, durch welchen der Riegel (2) in seine Freigabestellung überführbar ist. Um eine unberechtigte Betätigung der Notentriegelung und Vandalismus zu verhindern, ist ein auf den Übertragungsmechanismus (12,14) und/oder den Mitnehmer (11) der Notentriegelung wirkendes Sperrmittel (30) vorgesehen, welches eine Bewegung des Mitnehmers (11) der Notentriegelung sperrt, wenn sich der Mitnehmer (11) in seiner einen Normalbetrieb der Maschine oder des Aufzuges ermöglichenden Neutralstellung befindet.

## Beschreibung

Die Erfindung betrifft einen Türverschluss, für eine Tür einer Maschine oder eines Aufzuges, wobei der Türverschluss ein Gehäuse und einen Riegel aufweist, der bezüglich der Tür in eine Verriegelungsstellung und mittels eines Kopplungsmechanismus, der durch eine externe Einrichtung betätigbar ist, in eine Freigabestellung überführbar ist und der in dem Gehäuse gelagert ist, wobei der Verschluss eine manuell betätigbare Notentriegelung zur Überführung des Riegels in seine Freigabestellung aufweist, wobei die Notentriegelung einen Mitnehmer aufweist, der unter Überführung des Riegels in die Freigabestellung durch einen Notentriegelungsschlüssel betätigbar ist, und wobei ein Übertragungsmechanismus zur Übertragung einer Bewegung des Mitnehmers auf den Kopplungsmechanismus und/oder auf den Riegel vorgesehen ist, durch welchen der Riegel in seine Freigabestellung überführbar ist.

Gattungsgemäße Türverschlüsse, insbesondere bei öffentlich zugänglichen Aufzügen, sind oftmals mutwilligen Zerstörungen oder den Versuchen eines nicht autorisierten Eingriffs in den Betriebszustand des Aufzuges ausgesetzt. Da der für die Notentriegelung vorgesehene Dreikantschlüssel teilweise bereits allgemein leicht zugänglich ist, ist ein nicht autorisierter Eingriff in den Betriebszustand des Aufzuges oder der Maschine relativ leicht möglich und es kann die Gefahr bestehen, dass bei Öffnung der Schachttüren eines Aufzuges durch nicht berechtigte Personen aufgeschlossen werden, sodass diese Personen einer Absturzgefahr ausgesetzt sind. In der Europanorm EN 81-71 ist daher vorgesehen, dass der Notentriegelungsschlüssel (Dreikantschlüssel) erst dann benutzt werden kann, wenn zuvor ein Sicherheitssystem deaktiviert wird, wobei die Deaktivierung nur im Triebwerksraum des Aufzuges erfolgen darf. Entsprechendes kann auch für andere Maschinen gelten. Nach einer gewissen Zeitdauer muss eine automatische Reaktivierung erfolgen, um sicherzustellen, dass das Sicherheitssystem nicht funktionslos ist. Die Zeitschaltung muss bei Umschaltung des Aufzugs auf Inspektionssteuerung anhalten und bei Zurückschalten auf Normalsteuerung ausgelöst werden.

Es versteht sich, dass auch der Teil des Sicherheitssystems, welcher an dem Türverschluss angeordnet ist, durch bestimmungsgemäße Manipulationen Dritter ausgesetzt sein kann. Das eine unmittelbare Betätigung des Mitnehmers durch den Notentriegelungsschlüssel verhindernde Sicherheitssystem muss somit sehr robust ausgeführt, zuverlässig aktivierbar und deaktivierbar und möglichst einfach und betriebssicher ausgeführt sein.

Unabhängig hiervon können gattungsgemäße Türverschlüsse auch an anderen Maschinen mit beweglichen Teilen, insbesondere Fördereinrichtungen, eingesetzt werden, um die Betriebssicherheit zu erhöhen. Der Schacht entspricht hierbei allgemein dem Raum innerhalb des Aktionsbereichs der Maschine, zu dem das Wartungspersonal zur Wartung Zugang haben muss. Unter den Begriff "Tür" sollen ferner Verschlussklappen oder andere Absperrungen allgemein fallen.

Der Erfindung liegt die Aufgabe zugrunde, einen gattungsgemäßen Türverschluss zu schaffen, der zuverlässig gegen Vandalismus gesichert und einfach ausgeführt ist.

Die Aufgabe wird durch einen Türverschluss gelöst, bei welchem ein auf den Übertragungsmechanismus und/oder den Mitnehmer der Notentriegelung wirkendes Sperrmittel vorgesehen ist, welches eine Bewegung des Mitnehmers der Notentriegelung sperrt, wenn sich der Mitnehmer in seiner einen Normalbetrieb der Maschine oder des Aufzuges ermöglichenden Neutralstellung befindet. Dadurch, dass das Sperrmittel unmittelbar auf den Übertragungsmechanismus und/oder den Mitnehmer der Notentriegelung wirkt, kann eine Betätigung der Notentriegelung zuverlässig verhindert werden. Vorzugsweise wirkt das Sperrmittel unmittelbar auf den Übertragungsmechanismus. Weitere Einrichtungen wie beispielsweise einen Zugriff auf den Mitnehmer verhindernde Abdeckungen, die durch ein Sperrmittel gesichert werden, sind somit entbehrlich. Das Sperrmittel kann hierdurch robust, zuverlässig und einfach ausgeführt werden.

Bevorzugte Ausführungsformen ergeben sich aus den Unteransprüchen.

Der erfindungsgemäße Türverschluss kann einen zwangsöffnenden Sicherheitsschalter oder eine entsprechende elektrische Sicherheitsschaltung oder ein Schaltungsteil derselben aufweisen, welcher/welche durch den Mitnehmer der Notentriegelung mittelbar oder unmittelbar betätigbar sind. Ein derartiger Sicherheitsschalter kann eine Sicherheitsfunktion auslösen, beispielsweise zu einer Unterbrechung des Normalbetriebs des Aufzuges oder zu einer Wiederaufnahme desselben führen oder einen Anschlag auslösen, wenn der oberhalb oder unterhalb eines Aufzugsschachtes vorgesehene Schutzraum für das Wartungspersonal nicht ausreichend bemessen ist. Hierzu kann der Sicherheitsschalter in geeigneter Weise mit einer Steuerung des Aufzuges bzw. der Maschine verbunden oder verbindbar sein. Der Sicherheitsschalter kann insbesondere gemäß der Europa-Norm EN 81-1, 14.1.2.2 ausgeführt sein und hierzu die erforderlichen zwangsöffnenden Eigenschaften und erforderlichen Trennstrecken aufweisen. Im Falle einer Maschine kann eine Sicherheitseinrichtung ähnlicher oder auch anderer Funktion vorgesehen sein.

Es versteht sich, dass der erfindungsgemäße Türverschluss insbesondere aber auch ohne einen derartigen Sicherheitsschalter oder Bestandteil einer elektrischen Sicherheitsschaltung ausgeführt sein kann.

Vorzugsweise ist ein Entkoppelungsmechanismus vorhanden, der bei betriebsgemäßer Betätigung des Türverschlusses durch die externe Einrichtung der Maschine bzw. des Aufzuges die Entriegelung des Riegels von der Betätigung der Notentriegelung und/oder des Schalters entkoppelt. Bei einer betriebsmäßigen Betätigung des Türverschlusses werden somit die Notentriegelung und/oder der Sicherheitsschalter nicht betätigt.

Vorzugsweise ist der Mitnehmer zur Betätigung der Notentriegelung identisch zu dem Mitnehmer zur Betätigung des Sicherheitsschalters. Es können gegebenenfalls auch zwei unabhängige Mitnehmer vorgesehen sein, in diesem Fall können der Mitnehmer für den Sicherheitsschalter und der Mitnehmer für die Notentriegelung derart ausgeführt sein, dass sie durch unterschiedliche oder durch einen gemeinsamen Schlüssel zu betätigen sind. Die erfindungsgemäße, mittels eines Übertragungsmechanismus auf den Kopplungsmechanismus und/oder auf den Riegel wirkende Mitnehmer ist somit Teil einer indirekten Notentriegelung. Gegebenenfalls kann hierzu zusätzlich ein Mitnehmer einer herkömmlichen Notentriegelung vorgesehen sein, beispielsweise in Form eines an dem Kopplungsmechanismus, beispielsweise einem Winkelhebel desselben, angeordneter Mitnehmer.

Die Betätigung des Mitnehmers der Notentriegelung mittels des Übertragungsmechanismus und gegebenenfalls auch des Sicherheitsschalters kann axial und/oder rotatorisch erfolgen, vorzugsweise rotatorisch.

Vorzugsweise ist die Notentriegelung derart mit dem Sicherheitsschalter gekoppelt, dass bei Betätigung der Notentriegelung durch einen geeigneten Mitnehmer der Sicherheitsschalter die Sicherheitseinrichtung auslöst, die eine Sicherheitsfunktion bei zumindest teilweiser Überführung des Riegels in die Freigabestellung ausübt. Der Mitnehmer kann unmittelbar oder vorzugsweise durch ein Betätigungsmittel an dem Schalter oder an der Notentriegelung ankoppeln, wobei ein Mechanismus zur Betätigung der jeweils anderen Einrichtung vorgesehen ist.

Bei gattungsgemäßen Türverschlüssen kann ein Koppelungsmechanismus vorgesehen sein, der mit dem Riegel zusammenwirkt und der durch eine bezüglich des Türverschlusses externe Einrichtung wie beispielsweise durch die verfahrbare Kabine unter Überführung des Riegels in seine Freigabestellung betätigbar ist. Der Koppelungsmechanismus kann vielfältig ausgeführt sein, beispielsweise als Zugstange, als Rollenhebel, insbesondere als auf dem Gehäuse aufgeschraubter Rollenhebel, als Seitenlagerbock oder auf andere geeignete Weise, oder ein solches Element umfassen. Es können auch mehrere Koppelungsmechanismen gleichzeitig vorhanden sein können, so dass das Gehäuse beispielsweise mit einem Rollenhebel und einer Zugstange versehen sein kann. Gegebenenfalls können auch mehrere Türverschlüsse untereinander gekoppelt sein, beispielsweise durch eine Zugstange, die zwei Türverschlüsse miteinander verbindet und hierzu an dem Koppelungsmechanismus eines anderen Türverschlusses angreift.

Bei einem derartigen Türverschluss ist der der Notentriegelung und gegebenenfalls dem Schalter zugeordnete Mitnehmer vorzugsweise von dem Koppelungsmechanismus getrennt angeordnet, wobei ein Übertragungsmechanismus zur Übertragung der Bewegung des Mitnehmers auf den Koppelungsmechanismus und/oder auf den Riegel vorgesehen ist, mittels dessen durch Betätigung des Mitnehmers der Riegel in seine Freigabestellung überführbar ist. Hierdurch kann die Position des Mitnehmers räumlich getrennt von dem Koppelungsmechanismus und einem gegebenenfalls vorgesehenen separaten Mitnehmer für die Notentriegelung bzw. dem Schalter vorgesehen sein, so dass der Ort des Mitnehmers innerhalb des Gehäuses als auch des Mechanismus zur Übertragung der Bewegung des Mitnehmers auf den Riegel vielfältig variierbar ist. Gegebenenfalls kann das Drehteil auch unmittelbar mit dem Koppelungsmechanismus zusammenwirken, wobei gegebenenfalls das Drehteil auch unmittelbar durch den Mitnehmer betätigbar sein kann. Der Mitnehmer kann jeweils einstückig mit dem Drehteil verbunden sein.

Der Übertragungsmechanismus, durch den der Mitnehmer der Notentriegelung mit dem Koppelungsmechanismus oder, vorzugsweise unmittelbar, dem Riegel ankoppelt kann ein Entkoppelungsglied aufweisen oder mit dem Koppelungsmechanismus unter Ausbildung eines Entkoppelungsgliedes zusammenwirken, damit der Riegel durch die externe Einrichtung ohne Auslösung der Notentriegelung in seine Freigabestellung überführbar ist. Hierzu kann beispielsweise ein Angriffselement des Übertragungsmechanismus außerhalb des Wirkbereichs des Koppelungsmechanismus angeordnet sein, z.B. auf der der Bewegungsrichtung abgewandten Seite eines Angriffselementes desselben, wobei das Angriffselement des Übertragungsmechanismus auf den Koppelungsmechanismus hin bewegbar ist, um an diesen angreifen zu können. Gegebenenfalls kann die Entkoppelung auch durch eine andere Wegentkopplung oder auch durch eine Kraftentkoppelung erfolgen, so dass zur Betätigung der beiden Einrichtungen unterschiedliche Kräfte notwendig sind, oder auch auf andere geeignete Weise. Das Entkoppelungselement oder ein anderes geeignetes Element des Mechanismus kann auch ein Spiel aufweisen, damit zunächst der Sicherheitsschalter und erst zeitlich nachfolgend hierzu der Riegel in die Freigabestellung überführt wird.

Weist der Koppelungsmechanismus zumindest zwei durch eine Gelenkverbindung verbundene Bauteile auf, so wirkt der Übertragungsmechanismus vorzugsweise an der Gelenkverbindung mit dem Koppelungsmechanismus zusammen, beispielsweise mit einem vorgesehenen Gelenkstift, wodurch eine konstruktiv einfache Ausführungsform gegeben ist. Der Übertragungsmechanismus kann jedoch auch an einer anderen geeigneten Stelle des Koppelungsmechanismus angreifen, beispielsweise an einem speziell hierfür oder bereits für andere Zwecke vorgesehenen Mitnehmer, der beispielsweise an einem Gestängeteil oder Drehteil des Koppelungsmechanismus vorgesehen sein kann. Gegebenenfalls kann auch der Mitnehmer unmittelbar an dem Koppelungsmechanismus angreifen.

Der Übertragungsmechanismus kann beispielsweise eine Winkelstange oder ein anderes Gestängeteil aufweisen. Durch die Anordnung einer Winkelstange kann auf einfache Weise ein Querversatz des Übertragungsmechanismus erzeugt werden, so dass eine günstige Kraftübertragung möglich ist und gleichzeitig bei geringer Anzahl von Bauteilen die Lage der beiden Enden der Winkelstange zur Längsrichtung derselben variiert werden kann, so dass die Lage des Sicherheitsschalters frei wählbar ist. Die Winkelstange kann ein- oder mehrfach abgewickelt sein, vorzugsweise mit zumindest teilweise oder stets gegensinniger Abwinkelung aufeinanderfolgender Abwinkelungsstellen.

Der Übertragungsmechanismus kann ein durch den Mitnehmer der Notentriegelung betätigbares Drehteil, beispielsweise eine Nockenscheibe, aufweisen, die über ein Gestängeteil, insbesondere über einen Schieber oder eine Winkelstange, mit dem Koppelungsmechanismus zusammenwirken kann. Hierdurch ist bei großer Variabilität des Übertragungsmechanismus eine gute Kraftübertragung gewährleistet. Das Drehteil kann unmittelbar durch den Mitnehmer der Notentriegelung oder unter Zwischenschaltung weiterer Elemente betätigbar sein. Gegebenfalls kann die Zusammenwirkung von Dreh- und Gestängeteil auch umgekehrt sein, so dass das Gestängeteil mit dem Mitnehmer zusammenwirkt. Gegebenenfalls kann das Drehteil auch direkt an dem Koppelungsmechanismus angreifen, beispielsweise an einem Winkelhebel desselben.

Unabhängig hiervon, jedoch vorzugsweise in Kombination hiermit, ist ein Drehteil vorgesehen, welches vorzugsweise unmittelbar durch den dem Sicherheitsschalter zugeordneten Mitnehmer betätigbar ist, wobei das Drehteil mittelbar oder unmittelbar auf den Sicherheitsschalter wirkt und zugleich Teil des Übertragungsmechanismus ist, der eine rotatorische und/oder axiale Bewegung des Mitnehmers auf den Koppelungsmechanismus oder vorzugsweise unmittelbar auf den Riegel übertragen kann. Das Drehteil ist hierbei vorzugsweise einstückig mit dem Mitnehmer verbunden oder an diesem unmittelbar festgelegt. Das Drehteil kann insbesondere als Nockenscheibe ausgeführt sein, wobei durch die Krümmung einer Drehteilfläche, z.B. der Nockenoberfläche, die vorzugsweise unmittelbar an dem Sicherheitsschalter angreift, eine Wegübersetzung bezüglich der Bewegung des Mitnehmers und der Bewegung des Betätigungselementes des Schalters optimal einstellbar ist.

Vorzugsweise ist der Winkelhebel mit einem Schenkel ausgestattet, der mittels einer Gelenkverbindung wie eines Gelenkbolzens die Anbringung einer Zugstange für einen externen Koppelungsmechanismus ermöglicht. Diese Stelle des Winkelhebels ist besonders für eine Entkoppelung des Übertragungsmechanismus durch den Schieber geeignet, so dass bei Normalbetrieb durch den Koppelungsmechanismus der Sicherheitsschalter nicht betätigt wird.

Der Übertragungsmechanismus, insbesondere ein Gestängeteil wie beispielsweise ein Schieber desselben, greift vorzugsweise an einem drehbar gelagerten Winkelhebel des Koppelungsmechanismus an, wobei ein Ende des Winkelhebels, der der externen Einrichtung zugewandt ist, durch welche der Koppelungsmechanismus betätigbar ist, an dem Übertragungsmechanismus angreift und wobei der andere Schenkel des Winkelhebels mittelbar oder unmittelbar an dem Riegel angreift. Gegebenenfalls kann der Winkelhebel in seinem Drehpunkt einen zusätzlichen Mitnehmer aufweisen oder mit einem derartigen Mitnehmer gekoppelt sein. Unter dem Angriff des Übertragungsmechanismus mit dem Winkelhebel sei hierbei der Zustand verstanden, in welchem der Übertragungsmechanismus durch den Mitnehmer betätigt wird, wobei in einem anderen Zustand Übertragungs- und Koppelungsmechanismus voneinander entkoppelt sein können, so dass durch eine Betätigung des Koppelungsmechanismus, z.B. aufgrund der externen Einrichtung, die Notentriegelung und gegebenenfalls der Sicherheitsschalter nicht betätigbar ist. Alternativ kann der Koppelungsmechanismus auch an der Achse des verschwenkbaren Winkelhebels oder an anderer geeigneter Stelle angreifen, beispielsweise wenn der Koppelungsmechanismus als Rollenhebel ausgeführt ist.

Der Übertragungsmechanismus kann beispielsweise auch einen Winkelhebel an einer Stelle angreifen, die bezüglich der Winkelhebeldrehachse auf einer gegenüberliegenden Seite eines Schenkels angeordnet ist, durch welchen der Riegel mit der externen Einrichtung, welche mit dem Koppelungsmechanismus zusammenwirkt, verbunden ist, wobei der Schenkel insbesondere dem Riegel abgewandt angeordnet sein kann. Insbesondere kann die Anlenkstelle des Übertragungsmechanismus einem derartigen Schenkel des Winkelhebels gegenüberliegend angeordnet sein.

Vorzugsweise wirkt das Sperrmittel in seiner eine Betätigung der Notentriegelung verhindernden Sperrstellung unmittelbar auf das Gestängeteil und/oder das Drehteil des Übertragungsmechanismus unter Sperrung einer Bewegung desselben. Der sperrende Eingriff wirkt hierbei vorzugsweise formschlüssig, gegebenenfalls rastend, in der Bewegungsrichtung des Gestängeteils und/oder Drehteils. Das Gestängeteil kann insbesondere einen Winkelhebel oder ein im Wesentlichen gestrecktes Gestängeteils darstellen. Das Gestängeteil verbindet vorzugsweise mittelbar oder unmittelbar ein von dem Mitnehmer betätigtes Drehteil des Übertragungsmechanismus mit dem Koppelungsmechanismus und/oder dem Riegel. Das Drehteil kann hierbei als Nocken- oder Kurvenscheibe ausgebildet sein, die vorzugsweise unmittelbar, gegebenenfalls auch mittelbar durch den Mitnehmer der Notentriegelung betätigt wird. Die Betätigungsstellung der Notentriegelung, welche durch das Sperrmittel gesperrt wird, kann die einen Normalbetrieb der Maschine oder des Aufzuges ermöglichende Neutralstellung und/oder eine einen Notbetrieb der Maschine oder des Aufzuges ermöglichende Notentriegelungsstellung, in welcher somit durch das Sperrmittel eine Rückstellung der Notentriegelung verhindert wird, sein. Gleichzeitig kann gegebenenfalls durch das Sperrmittel eine Änderung der Schaltstellung eines vorgesehenen Sicherheitsschalters gesperrt werden.

Das Sperrmittel kann beispielsweise als selbstsperrendes Mittel, beispielsweise in Form eines federbelasteten Sperrorgans, ausgeführt sein. Das Sperrmittel kann manuell durch eine besondere Handlung, vorzugsweise mit einem speziellen Werkzeug entriegelt werden. Vorzugsweise wird das Sperrmittel durch eine elektrische Einrichtung, einschließlich elektrooptische oder vorzugsweise elektromagnetische Einrichtung wie einen Elektromagneten in seine Sperrstellung und/oder Entsperrstellung überführt. Die elektrische Einrichtung zur Betätigung des Sperrmittels kann insbesondere von einer externen Stelle außerhalb des Türverschlusses, beispielsweise einem Steuerungs- oder Triebwerksraum des Aufzuges oder der Maschine oder einer anderen geeigneten Stelle betätigbar sein.

Die elektrische Einrichtung zur Betätigung des Sperrmittels kann derart ausgeführt sein, dass bei Stromlosstellung der Einrichtung, beispielsweise eines Elektromagneten, die Notentriegelung betätigbar ist. Hierzu kann sich das Sperrmittel mittels der elektrischen Einrichtung unter Bewirkung einer Haltekraft, z.B. einer elektromagnetischen Haltekraft, in seiner eine Betätigung der Notentriegelung verhindernden Sperrstellung befinden und Rückstellmittel wie beispielsweise Federelemente vorgesehen sein, die bei Stromlosstellung der elektrischen Einrichtung das Sperrmittel in seine Entsperrstellung überführen, in welcher die Notentriegelung betätigbar ist. Das Rückstellmittel kann unmittelbar auf das Sperrmittel oder ein Bauteil der elektrischen Einrichtung einwirken, vorzugsweise jedoch auf ein zwischengeschaltetes Kraftübertragungsmittel wie eine Wippe oder dergleichen. Die elektrische Sperrmittelbetätigungseinrichtung kann auch derart ausgeführt sein, dass bei aktiver Betätigung derselben die Notentriegelung betätigbar ist, beispielsweise das Sperrmittel entgegen einer Rückstellkraft einer Rückstelleinrichtung wie eines Federelementes durch die elektrische Einrichtung in seine Entsperrstellung überführt wird.

Die Erfindung wird im folgenden beispielhaft beschrieben und anhand der Figuren beispielhaft erläutert. Es zeigen:
- Figur 1: eine schematische Darstellung eines erfindungsgemäßen Türverschlusses in einer ersten Schaltstellung (Figur 1a) und in einer zweiten Schaltstellung der Notentriegelung (Figur 1b),
- Figur 2: eine schematische Darstellung eines weiteren Ausführungsbeispiels des erfindungsgemäßen Türverschlusses mit aktiv zu entsperrenden Sperrmittel in drei unterschiedlichen Schaltstellung (Figur 2a,b,c) und
- Figur 3: eine schematische Darstellung eines weiteren Ausführungsbeispiels mit passiv entsperrtem Sperrmittel in drei unterschiedlichen Schaltstellungen (Figuren 3a,b,c).

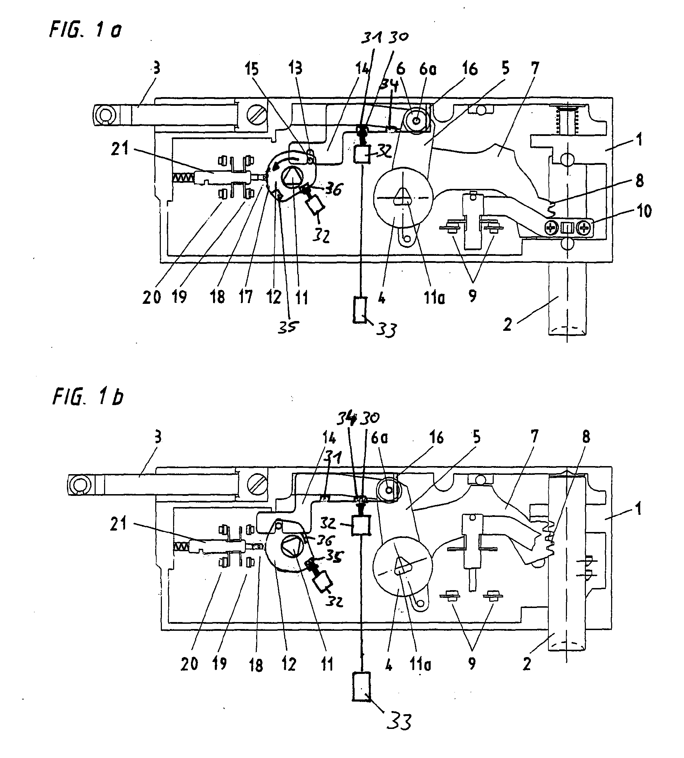

Figur 1 zeigt einen erfindungsgemäßen Türverschluss mit einem Gehäuse 1, in dem ein bolzenförmiger Riegel 2 verschiebbar gelagert ist, welcher bezüglich einer nicht dargestellten korrespondierenden Tür in eine Verriegelungsstellung (Figur 1a) und in eine Freigabestellung (Figur 1b) überführbar ist.

Der Türverschluss ist als Verschluss für eine Schachttür eines Aufzuges ausgestaltet. Zur Betätigung des Riegels 2 bei normalem Fahrbetrieb des Aufzuges ist ein Koppelungsmechanismus bestehend aus einer Zugstange 3 und einem drehbar gelagerten Winkelhebel 4 vorgesehen, wobei ein Schenkel 5 des Winkelhebels mit der Gelenkverbindung 6, die durch einen Gelenkstift 6a erzeugt wird, mit der Zugstange 3 verbunden ist und wobei der andere Schenkel 7 des Winkelhebels als Zahnhebel mit einer Verzahnung 8 versehen ist, die an dem Riegel 2 angreift. Die Zugstange 3 wird im Ausführungsbeispiel bei Einfahren der Aufzugskabine in die Haltestelle in Längsrichtung verschoben, wobei die Aufzugskabine als externe Einrichtung fungiert, wodurch der Winkelhebel 4 derart verschwenkt wird, dass der Riegel 2 in seine Freigabestellung überführt wird. Eine Betätigung der Notentriegelung oder des gegebenenfalls vorgesehenen Sicherheitsschalters erfolgt hierbei nicht. Die Schließstellung der Verriegelung wird hierbei durch den Sperrmittelschalter 9 überwacht, dessen Sicherheitsschalterbrücke über den Flansch 10 mit dem Riegel 2 verbunden ist.

Der nach dem Ausführungsbeispiel vorgesehene, nur durch die Notentriegelung betätigbare Sicherheitsschalter 19 ist optional. Es versteht sich somit, dass je nach Anwendungsfall der Sicherheitsschalter 19 nicht vorhanden sein muss. Gegebenenfalls kann die konkrete Ausbildung des Verschlusses hieran angepasst werden, ohne dass dies zwingend notwendig ist.

Um eine Notentriegelung des Türverschlusses und gegebenenfalls auch eine Schaltung einer Sicherheitseinrichtung mittels des - wahlweise vorgesehen - Sicherheitsschalters zu bewirken, ist ein drehbar gelagerter Mitnehmer 11 vorgesehen, der durch einen korrespondierenden, nicht dargestellten Schlüssel entgegen dem Uhrzeigersinn (Pfeilrichtung) von der Stellung gemäß Figur 1a in die Stellung gemäß Figur 1b überführbar ist. Der Mitnehmer 11 greift hierbei an eine um dessen Achse drehbar gelagerte Nockenscheibe 12 an, die mit einem Angriffspunkt 13 ein vorzugsweise als Schieber 14 ausgebildetes Gestängeteil betätigt, wobei nach dem Ausführungsbeispiel der Schieber 14 in Längsrichtung verschoben wird. Hierzu greift die Nockenscheibe mit einem Stift 15 in ein Langloch des Schiebers 14 ein, so dass der Schieber 14 ausschließlich eine Längsbewegung durchführt. Der Schieber 14 ist hierbei als Winkelstange mit zwei gegensinnigen Abwinkelungen ausgebildet. Der der Nockenscheibe 12 abgewandte Endbereich des Schiebers 14 kann unter Betätigung des Mitnehmers 11 an dem Koppelungsmechanismus, genauer an dem Winkelhebel 4, im besonderen an der Gelenkverbindung 6, angreifen. Hierzu ist der Schieber 14 mit einem quer zur Schieberlängsrichtung in Richtung auf die Gelenkverbindung 6 vorstehenden Steg 16 versehen, der als umgebördeltes Ende des Schiebers ausgeführt ist. Der Steg 16 ist an dem Gelenkstift 6a so angeordnet, dass bei einer durch die Zugstange 3 erfolgten Verschwenkung des Winkelhebels 4 der Gelenkstift 6a nicht an den Steg 16 unter Verschiebung des Schiebers 14 angreift, wodurch der Mitnehmer 11 entkoppelt ist. Hierzu ist der Steg an dem der der Wirkrichtung der Zugstange abgewandten Seite des Gelenkstiftes angeordnet, wobei an Stelle des Gelenkstiftes auch ein anderer an geeigneter Stelle angebrachter Angriffspunkt ausgewählt werden kann. Jedoch kann durch eine Verdrehung des Mitnehmers 11 durch einen Schlüssel unter Verschiebung des Schiebers 14 der Steg 16 an dem Gelenkstück 6a angreifen, wodurch der Winkelhebel 4 derart verschwenkbar ist, dass der Riegel 2 in seine Freigabestellung überführbar ist.

Zur Schaltung des wahlweise vorgesehenen Sicherheitsschalters 19 weist die Nockenscheibe 12 ferner, vorzugsweise dem Angriffspunkt an dem Schieber 14 gegenüberliegend, eine Kurve 17 auf, durch die ein Betätigungselement 18, das als Rolle ausgeführt sein kann, des als zwangsöffnende Sicherheitsschalter 19 ausgeführten Sicherheitsschalters betätigbar ist. Das Betätigungselement 18 des Sicherheitsschalters greift hierbei zur Schaltung des Schalters 19 in eine Ausnehmung des korrespondierenden Bauteils, hier dem Außenumfang der Nockenscheibe ein, wobei dies durch Federkraft gegen das Bauteil kraftbeaufschlagt wird. Hierdurch kann bereits der Schalter in seiner Schaltstellung gehalten werden. Der aus Nockenscheibe 12 und Schieber 14 bestehende Übertragungsmechanismus kann so ausgeführt sein, dass der Sicherheitsschalter 19 betätigt wird, bevor der Riegel 2 in seiner endgültigen Freigabestellung liegt. Der Schalter ist hierbei derart mit der Aufzugssteuerung verbunden, dass durch Betätigung des Sicherheitsschalters der Normalbetrieb unterbrechbar oder wiederaufnehmbar ist. An dem Sicherheitsschalter kann ferner ein Schließkontakt 20 zur Auslösung anderer Steuerungsaufgaben angeordnet sein, beispielsweise zur automatischen Auslösung eines beweglichen Anschlages des zugeordneten Aufzuges.

Zur Sperrung der Notentriegelung in ihrer einen Normalbetrieb des Aufzuges ermöglichenden Neutralstellung ist ein Sperrmittel 30 vorgesehen, welches mit einem lageveränderlichen Sperrstift an einem Angriffsbereich des Gestängeteils des Übertragungsmechanismus, der hier als Schieber 14 ausgebildet ist, angreift. Der Angriffsbereich ist hier als Einkerbung 31 ausgebildet. Zur Überführung des Sperrmittels in seine Nichtsperrstellung, in welche die Notentriegelung durch Betätigung des Mitnehmers 11 in ihre einen Notfahrbetrieb des Aufzuges ermöglichende Stellung überführbar ist, ist eine elektrische Einrichtung 32 in Form eines Elektromagneten vorgesehen. Das Sperrmittel 30 wird hierbei durch einen Rückstellmechanismus, beispielsweise durch eine sich an der elektrischen Einrichtung 32 abstützende Feder (nicht dargestellt) in der Einkerbung 31 gehalten. Bei Betätigung der elektrischen Einrichtung 32 mittels der Fernwirkeinrichtung 33 wird das Sperrmittel 30 aus der Einkerbung 31 entfernt und die Notentriegelung ist manuell betätigbar.

In der in Figur 1b dargestellten Schaltstellung der Notentriegelung greift das Sperrmittel 30 in eine weitere Einkerbung 34 ein, sodass die Notentriegelung auch in ihrer eine Notfahrt des Aufzuges ermöglichenden Betätigungsstellung, der Entriegelungsstellung, gesperrt ist. Auch in dieser Stellung ist das Sperrmittel mittels der elektrischen Einrichtung (Elektromagnet) 32 in eine entsperrende Stellung überführbar.

Wie ferner durch die Figuren 1a, 1b verdeutlicht wird, können alternativ das Sperrmittel 30 sowie die elektrische Einrichtung 32 auch derart angeordnet sein, dass diese unmittelbar an dem in Form einer Nockenscheibe 12 ausgebildeten Drehteil angreifen, wozu hier ebenfalls entsprechende Einkerbungen 35, 36 vorgesehen sind, um die Notentriegelung in beiden Betätigungsstellungen zu sperren.

In den Ausführungsformen nach Figur 1 kann auf die Sperrung in der Notbetriebsstellung des Türverschlusses, die durch die Einkerbungen 34 bzw. 35 ermöglicht wird, gegebenenfalls auch verzichtet werden.

Gegebenenfalls kann zusätzlich zu dem Mitnehmer 11, durch den über die Nockenscheibe als Betätigungsmechanismus der Sicherheitsschalter und über den Übertragungsmechanismus zugleich auch die Notentriegelung betätigbar ist, ein weiterer Mitnehmer 11a vorgesehen sein.

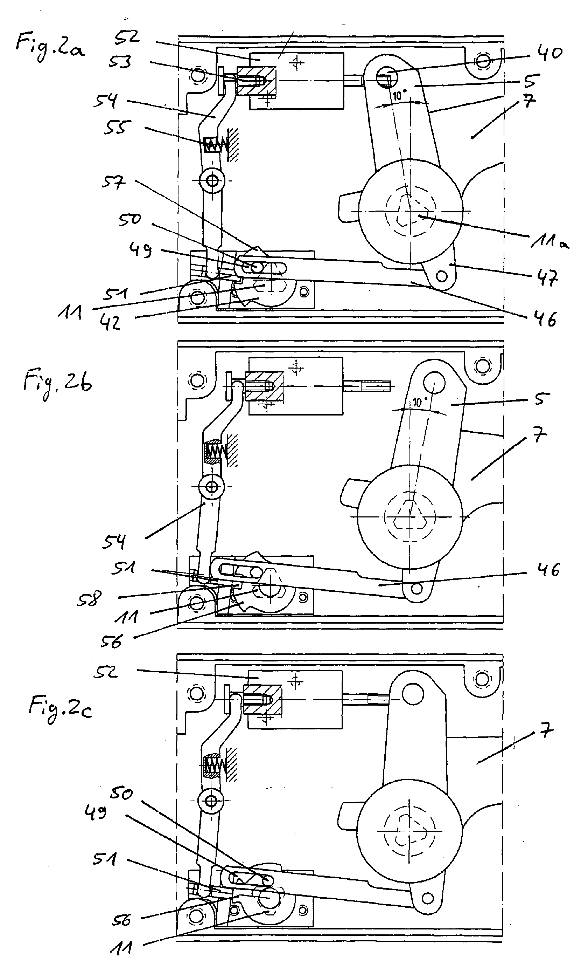

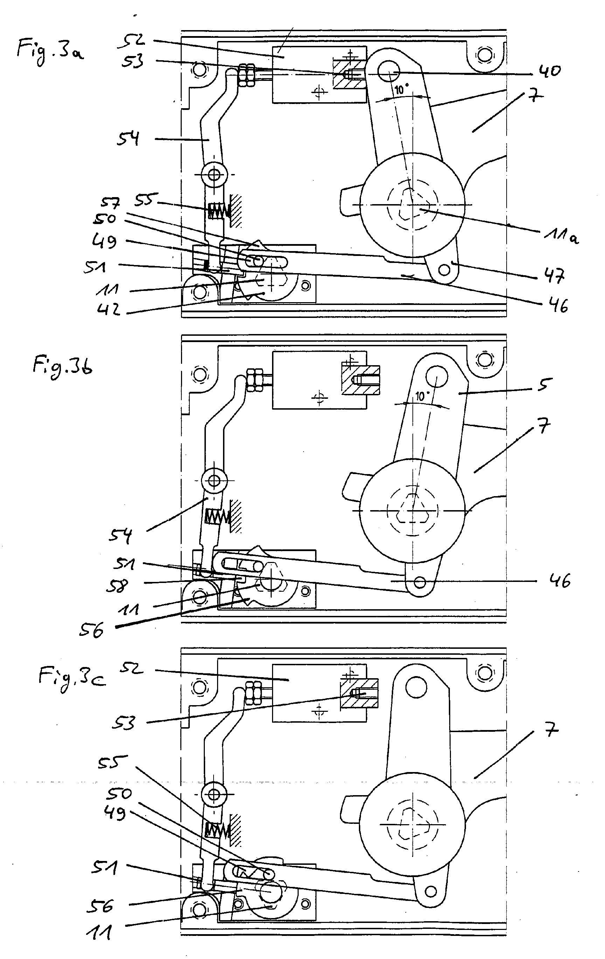

Die Figuren 2 und 3 zeigen Ausschnitte zweier alternativer Ausführungsformen des erfindungsgemäßen Türverschlusses, wobei gleiche Bauteile wie in Figur 1 mit gleichen Bezugsziffern versehen sind. Es versteht sich, dass der in den Figuren rechts des Winkelhebels 4 angeordnete Bereich des Türverschlusses identisch zu dem der Figur 1 ausgebildet sein kann, was auch für die Position des Riegels 2 bei den unterschiedlichen Stellungen des Winkelhebels gilt. Auch wirkt der Winkelhebel 4 mit einer Zugstange (nicht dargestellt) entsprechend der Zugstange 3 der Figuren 1 und 2 zusammen, die an dem Endbereich 40 des Schenkels 5 ankoppelt. Auch gemäß den Ausführungsbeispielen der Figuren 2 und 3 ist an dem Drehpunkt des Betätigungsorgans zur Notentriegelung des Riegels 2, nach dem Ausführungsbeispiel an dem Drehpunkt des mit einer Verzahnung versehenen Schenkels 7, ein Mitnehmer 11a einer Notentriegelung in Standardausführung angebracht, der bei dem erfindungsgemäßen Türverschluss jedoch nicht benutzt wird oder nicht benutzt werden muss.

Der Türverschluss gemäß Figur 2 weist einen Mitnehmer 11 zur indirekten Betätigung der Notentriegelung auf, der nach dem Ausführungsbeispiel auf ein Drehteil wirkt, das als Nocken- bzw. Kurvenscheibe 42 ausgeführt ist. Der Mitnehmer 11 ist hierbei im Drehpunkt der Nockenscheibe 42 gelagert, gegebenenfalls kann jedoch auch eine indirekte Betätigung erfolgen. Der Mitnehmer 11 wirkt mit einem Übertragungsmechanismus zur Betätigung des Riegels 2 (nicht dargestellt) zur Notentriegelung des Türverschlusses zusammen. Der Übertragungsmechanismus weist ein Gestängeteil 46 auf, welches an einem Endbereich an einem Fortsatz des Betätigungsorgans des Riegels 2 angreift, nach dem Ausführungsbeispiel an einem weiteren Schenkel 47 des Winkelhebels 4, der auf der bezogen auf den Winkelhebeldrehpunkt gegenüberliegenden Seite des Schenkels 5, hier in etwa in Verlängerung desselben angeordnet ist. Zur Entkoppelung einer bestimmungsgemäßen Betätigung des Winkelhebels 4 bei einer Betätigung der Zugstange ist der Mitnehmer 11 von dem Übertragungsmechanismus bzw. dem Gestängeteil 46 entkoppelt, wozu nach dem Ausführungsbeispiel ein Langloch 49 an dem Gestängeteil vorgesehen ist, in welches ein zapfenförmiger Mitnehmer 50 der Nockenscheibe 42 eingreift.

Zur Sperrung der Notentriegelung in ihrer Neutralstellung, in welcher ein normaler Fahrbetrieb des zugeordneten Aufzuges ermöglicht ist (Fig. 2a), ist ein als Stift ausgeführtes Sperrmittel 51 vorgesehen, welches die Nockenscheibe 42, eine Drehung derselben verhindernd, angreift. Hierzu greift das Sperrmittel 51 in eine Einkerbung 58 der Nockenscheibe ein. Die Sperrung erfolgt somit unter Ausbildung einer Formschlussverbindung in Bewegungsrichtung der gesperrten Elementes. Es versteht sich, dass das Sperrmittel 51 gegebenenfalls auch an einem anderen geeigneten Element des Übertragungsmechanismus oder dem Mitnehmer angreifen kann, beispielsweise dem Gestängeteil 46. Soll eine Bewegung des Mitnehmers vollständig verhindert werden, kann das Langloch auch an dem dem Koppelungsmechanismus zugewandten Ende angeordnet sein.

Das Sperrmittel kann mittels einer elektrischen Einrichtung 52, die als Elektromagnet ausgeführt ist, betätigt werden, um dieses in eine die Notentriegelung freigebende Stellung gemäß Fig. 2b überführt zu werden. Hierzu sind an der elektrischen Einrichtung 52 ein gegenüber dieser verschiebbarer Anker 53 und eine Wippe 54 zur Kraftübertragung vorgesehen. Zur Überführung der Wippe 54 in ihre Ausgangsposition ist ein Rückstellmechanismus 55 vorgesehen, der hier als Feder ausgeführt ist. Der Elektromagnet 52 ist durch eine Fernübertragung ansteuerbar, die außerhalb des Türverschlusses angeordnet ist, beispielsweise in dem Triebwerksraum des Aufzuges.

In der Schaltstellung gemäß Fig. 2a befindet sich somit der Türverschluss gemäß der Stellung des Betätigungsorgans des Riegels, genauer gesagt der Stellung des Winkelhebels 4, in entriegeltem Zustand. Die Notentriegelung mit dem Mitnehmer 11 ist hierbei nicht betätigbar und gesperrt.

Figur 2b zeigt den Türverschluss in verriegelter Stellung bei Normalbetrieb. Das Betätigungsorgan bzw. der Winkelhebel 4 befinden sich in einer Stellung mit ausgefahrenem Riegel entsprechend der Anordnung gemäß Fig. 1a. Die Notentriegelung kann durch Drehen des Mitnehmers 11 im Uhrzeigersinn jederzeit betätigt werden, da durch die Stellung des Drehteils bzw. der Nockenscheibe 42 relativ zu dem Übertragungsmechanismus bzw. dem Gestängeteil 46 die Entkoppelung aufgehoben ist. Der Mitnehmer 50 befindet sich hierzu in der Endstellung des Langloches 49. Die Bewegung der Nockenscheibe 42 wird durch das Sperrmittel 51 nicht behindert, welches nichtsperrend an dem Umfang der Nockenscheibe 42 anliegen kann, oder, wie gezeigt außerhalb der Einkerbung 58 angeordnet ist. Der Elektromagnet ist hierzu in betätigtem Zustand, sodass der Anker 53 eingefahren ist, und erzeugt eine entsprechende Stellung der Wippe 54 oder gegebenenfalls eines anderen Wirkelementes, welches die Sperrmittelstellung bestimmt.

In der Schaltstellung nach Figur 2b kann der Elektromagnet über eine Zeitschaltung derart betätigt werden, dass innerhalb einer vorgegebenen oder bestimmbaren Zeit eine Rückstellung des Sperrmittels erfolgt, um während dieser Zeit die Notentriegelung betätigen zu können. Hierzu kann der Elektromagnet stromlos gestellt werden, so dass wieder die Schaltstellung nach Figur 2a eingenommen wird.

Fig. 2c zeigt den Türverschluss in entriegelter Stellung durch Betätigung des Mitnehmers 11 der indirekten Notentriegelung, welcher über den Übertragungsmechanismus bzw. das Gestängeteil 46 auf den Koppelmechanismus des Riegels, genauer gesagt den Winkelhebel 4, wirkt. Hierzu wurde der Mitnehmer 11 und mit diesem die Nockenscheibe 42 im Uhrzeigersinn gedreht. Eine manuelle Rückstellung der Notentriegelung ist hier möglich. Der Winkelhebel 4 befindet sich in der Stellung gemäß Figur 2c in einer Zwischenstellung verglichen mit den Stellungen der Figuren 2a und 2b, wobei ein Normalbetrieb des Aufzuges in dieser Stellung jedoch nicht möglich ist.

Es versteht sich, dass gegebenenfalls die Notentriegelung in dieser Stellung, in welcher der Riegel 2 entriegelt ist, mittels des Sperrmittels 51 gesperrt werden kann, welches hierzu an dem Übertragungsmechanismus der Notentriegelung oder gegebenenfalls an dem Mitnehmer selber angreifen kann. Hierzu kann der Schulterbereich 56, der in der Stellung der Nockenscheibe 42 gemäß Figur 2c dem Sperrmittel gegenüberliegt, eingebuchtet sein, sodass bei eingefahrenem Sperrmittel die Nockenscheibe 42 nicht mehr entgegen dem Uhrzeigersinn zurückgedreht werden kann. Eine hierzu notwendige Stromlosstellung des Elektromagneten oder Betätigung der elektrischen Einrichtung allgemein kann durch Betätigung eines elektrischen Kontakts (nicht gezeigt) erfolgen, der beispielsweise betätigt wird, wenn die Notentriegelung sich in ihrer Sollstellung bzw. Anschlagstellung befindet. Die Betätigung kann beispielsweise durch die Schulter 57 der Nockenscheibe oder durch einen anderen geeigneten Mitnehmer erfolgen. Über die Schulter 57 kann auch ein anderer Schalter, insbesondere ein zwangsöffnender Sicherheitsschalter, betätigt werden.

Die Ausbildung des Türverschlusses gemäß Fig. 3 entspricht im Wesentlichen derjenigen gemäß Fig. 2, wobei gleiche Bauteile mit gleichen Bezugsziffern versehen sind. Im Unterschied zu Fig. 2 ist die elektrische Einrichtung 52 zur Betätigung des Sperrmittels hier der Elektromagnet, hier derart angeordnet, dass in der Schaltstellung des Türverschlusses gemäß Figur 3a insbesondere der Stellung der Notentriegelung und der Stellung der Nockenscheibe 42, die der Schaltstellung in Figur 2a entspricht, derart angeordnet, dass das Sperrmittel 51 bei betätigtem im Elektromagneten sich in seiner Verriegelungsstellung befindet und nach dem Ausführungsbeispiel in die Einkerbungen der Nockenscheibe 42 eingreift. Hierzu ist der Anker 53 auf der dem Kraftübertragungsmittel abgewandten Seite des Elektromagneten 52 angeordnet, wobei das kraftübertragende Mittel, welches die Sperrmittelstellung aufgrund der Ankerstellung bestimmt, nach dem Ausführungsbeispiel als Wippe 54 ausgebildet ist. Bei eingezogenem Anker 53 greift somit das Sperrmittel 51 arretierend an den Übertragungsmechanismus an.

Die Schaltstellung gemäß Figur 3b entspricht im Wesentlichen derjenigen gemäß Figur 2b, wobei jedoch im Unterschied zu dieser die Notentriegelung betätigt werden kann, da der Elektromagnet sich in stromlosen Zustand befindet und hierdurch das Sperrmittel 51 nicht mehr im Wirkeingriff mit dem Übertragungsmechanismus, bzw. der Nockenscheibe 42 steht. Die Stellung des kraftübertragenden Mittel, bzw. der Wippe 54 wird hierbei den durch die Feder 55 gebildeten Rückstellmechanismus erzeugt.

Die Schaltstellung des Türverschlusses gemäß Figur 3c und die der Notentriegelung entspricht im Wesentlichen der nach Figur 2c, wobei sich der Türverschluss in entriegelter Stellung durch Betätigung der direkten Notentriegelung befindet und die Rückstellung derselben durch Betätigung des Mitnehmers 11 durch den Notentriegelungsschlüssel möglich ist.

Es versteht sich, dass auch nach den Figuren 2 und 3 eine Fernwirkeinrichtung zur Betätigung der elektrischen Einrichtung vorgesehen sein kann.

Es versteht sich, dass der Elektromagnet auch in anderer geeigneter Weise mit dem Sperrmittel zusammenwirken kann, wozu beispielsweise der Elektromagnet in Verlängerung des beispielsweise stiftförmigen Sperrmittels angeordnet sein kann.

### Bezugszeichenliste

- 1: Gehäuse
- 2: Riegel
- 3: Zugstange
- 4: Winkelhebel
- 5: Schenkel
- 6: Gelenkverbindung
- 6a: Gelenkstift
- 7: Schenkel
- 8: Verzahnung
- 9: Sperrmittelschalter
- 10: Flansch
- 11, 11a: Mitnehmer
- 12: Nockenscheibe
- 13: Angriffspunkt
- 14: Schieber
- 15: Stift
- 16: Steg
- 17: Kurve
- 18: Betätigungselement
- 19: Sicherheitsschalter
- 20: Schließkontakt am Sicherheitsschalter
- 30: Sperrmittel
- 31: Einkerbung
- 32: elektrische Einrichtung
- 33: Fernwirkeinrichtung
- 34, 35, 36: Einkerbung
- 40: Endbereich
- 42: Nockenscheibe
- 46: Gestängeteil
- 47: Schenkel
- 49: Langloch
- 50: Mitnehmer
- 51: Sperrmittel
- 52: elektrische Einrichtung
- 53: Anker
- 54: Wippe
- 55: Rückstellmechanismus
- 56: Schulter
- 57: Schulter
- 58: Einkerbung

## Patentansprüche

1. Türverschluss für eine Tür einer Maschine oder eines Aufzuges, wobei der Türverschluss ein Gehäuse (1) und einen Riegel (2) aufweist, der bezüglich der Tür in eine Verriegelungsstellung und mittels eines Kopplungsmechanismus (3,4), der durch eine externe Einrichtung betätigbar ist, in eine Freigabestellung überführbar ist und der in dem Gehäuse (1) gelagert ist, wobei der Verschluss eine manuell betätigbare Notentriegelung (11, 12, 14) zur Überführung des Riegels (2) in seine Freigabestellung aufweist, wobei die Notentriegelung (11, 12, 14) einen Mitnehmer (11) aufweist, der unter Überführung des Riegels (2) in die Freigabestellung durch einen Notentriegelungsschlüssel betätigbar ist, und wobei ein Übertragungsmechanismus zur Übertragung einer Bewegung des Mitnehmers auf den Kopplungsmechanismus (3,4) und/oder auf den Riegel (2) vorgesehen ist, durch welchen der Riegel (2) in seine Freigabestellung überführbar ist, **dadurch gekennzeichnet, dass** ein auf den Übertragungsmechanismus (12,14) und/oder den Mitnehmer (11) der Notentriegelung wirkendes Sperrmittel (30) vorgesehen ist, welches eine Bewegung des Mitnehmers (11) der Notentriegelung sperrt, wenn sich der Mitnehmer (11) in seiner einen Normalbetrieb der Maschine oder des Aufzuges ermöglichenden Neutralstellung befindet.

2. Türverschluss nach Anspruch 1 **dadurch gekennzeichnet, dass** der Übertragungsmechanismus ein Gestängeteil (14) aufweist, das durch den Mitnehmer (11) unter Betätigung der Notentriegelung verschieb- und/oder verschwenkbar ist.

3. Türverschluss nach Anspruch 1 oder 2, **dadurch gekennzeichnet, dass** der Übertragungsmechanismus ein Drehteil (12) aufweist, das durch den Mitnehmer (11) unter Betätigung der Notentriegelung verdrehbar ist.

4. Türverschluss nach einem der Ansprüche 1 bis 3, **dadurch gekennzeichnet , dass** der Übertragungsmechanismus (12, 14) ein Drehteil (12) und ein mit diesem gekoppeltes Gestängeteil (14) aufweist und dass das Drehteil (12) oder das Gestängeteil (14) unmittelbar durch den Mitnehmer (11) betätigbar ist und das jeweils andere Bauteil mit dem Koppelungsmechanismus (3, 4) und/oder dem Riegel (2) zusammenwirkt.

5. Türverschluss nach einem der Ansprüche 1 bis 4, **dadurch gekennzeichnet, dass** das auf den Übertragungsmechanismus (12,14) und/oder den Mitnehmer (11) der Notentriegelung wirkende Sperrmittel (30, 51) eine Bewegung des Mitnehmers (11) in seiner einen Notbetrieb der Maschine oder des Aufzuges ermöglichenden Entriegelungsstellung sperrt.

6. Türverschluss nach einem der Ansprüche 1 bis 5, **dadurch gekennzeichnet, dass** das Sperrmittel (30, 51) in seiner eine Betätigung der Notentriegelung verhindernden Sperrstellung unmittelbar auf das Gestängeteil (14) und/oder das Drehteil (12) des Übertragungsmechanismus sperrend wirkt.

7. Türverschluss nach einem der Ansprüche 1 bis 6, **dadurch gekennzeichnet, dass** das Sperrmittel (30, 51) durch eine elektrische Einrichtung (32, 52) ausgehend von einer Sperrstellung oder Entsperrstellung in die jeweils andere Betätigungsstellung überführbar ist.

8. Türverschluss nach Anspruch 7, **dadurch gekennzeichnet, dass** die elektrische Einrichtung (52) zur Betätigung des Sperrmittels (51) derart ausgeführt ist, dass bei Stromlosstellung der Einrichtung die Notentriegelung betätigbar ist.

9. Türverschluss nach Anspruch 7, **dadurch gekennzeichnet, dass** die elektrische Einrichtung (52) zur Betätigung des Sperrmittels (51) derart ausgeführt ist, dass bei aktiver Betätigung der Einrichtung die Notentriegelung betätigbar ist.

10. Türverschluss nach einem der Ansprüche 1 bis 9, **dadurch gekennzeichnet, dass** das Sperrmittel (30, 51) durch eine Fernwirkeinrichtung (33) betätigbar ist.

11. Türverschluss nach einem der Ansprüche 1 bis 10, **dadurch gekennzeichnet, dass** der Mitnehmer (11) der Notentriegelung über den Übertragungsmechanismus (12,14) an einem Schenkel (5,7) eines als Element des Kopplungsmechanismus ausgebildetetn Winkelhebels (4) angreift, durch den der Riegel (2) in seine Freigabestellung überführbar ist.

12. Türverschluss nach einem der Ansprüche 1 bis 11, **dadurch gekennzeichnet, dass** ein zwangsöffnender oder nicht-zwangsöffnender Sicherheitsschalter (19) vorgesehen ist, der durch Betätigung des Mitnehmers (11) der Notentriegelung betätigbar ist.
